# EUROPEAN PATENT APPLICATION

(11) **EP 2 733 424 A2**
(43) Date of publication of application: **21.05.2014**
(21) Application number: 13192949.9
(22) Date of filing: 14.11.2013
(51) Int. Cl.: F23R 3/34, F23R 3/28, F23R 3/46, F23N 1/00, F23N 5/16

(54) **A Fuel Supply System for Supplying Fuel to a Combustion Section of a Gas Turbine**

(30) Priority: 19.11.2012 US 201213680446
(71) Applicant: General Electric Company, Schenectady, New York 12345 (US)
(72) Inventor: Toronto, David Kaylor, Greenville, SC South Carolina 29615 (US)
(74) Representative: Cleary, Fidelma

(57) **Abstract**

A fuel supply system supplies fuel to a plurality of combustion sectors (70,74) of a combustion section of a gas turbine. Each of the combustion sectors includes at least two combustors. The fuel supply system generally includes a fuel distribution manifold (60) that is in fluid communication with a fuel supply. A first flow path (68) is defined between the fuel distribution manifold (60) and a first combustion sector (60). A second flow path (72) is defined between the fuel distribution manifold (60) and a second combustion sector (74).

## Description

### FIELD OF THE INVENTION

The present invention generally relates to a fuel system for delivering fuel to a combustion section of a gas turbine. More particularly, this invention relates to a fuel supply system for controlling fuel flow to a plurality of combustion sectors of the combustion section.

### BACKGROUND OF THE INVENTION

In general, gas turbine engines combust a fuel/air mixture in a number of combustors to release heat energy that is channeled to a turbine. A central fuel or gas supply is linked to each of the combustors. The central supply is operated to deliver an amount of fuel through a supply line that is linked to a common manifold which supplies all of the combustors. The fuel is mixed with air in a combustion chamber defined within each of the combustors and is ignited to form a rapidly expanding high temperature gas stream. The turbine converts kinetic and thermal energy from the high temperature gas stream into mechanical energy which rotates a turbine shaft. The output of the turbine may be used in a variety of applications such as, for example, powering an electrical generator and/or driving a compressor section of the gas turbine.

The bulk fuel-to-air ratio in each combustion chamber of the gas turbine should be the same. A constant fuel-to-air mixture in each combustor allows the mixture to be maintained at a lean ratio that best reduces CO, UHC and NOx emissions. In addition, a uniform fuel-to-air ratio between each of the combustors ensures a uniform distribution of temperature among the combustors. A uniform distribution of temperature and pressure reduces the thermal and mechanical stresses on the combustors, the turbine and other hot gas stream components of the gas turbine, thereby prolonging the operational life of the combustors and the turbine. Peak hot gas stream temperatures and pressures in some combustion chambers (but not others) increases thermal stresses and reduces the mechanical life expectancy of materials in hotter high fuel-to-air ratio combustors.

Combustion flame instability results where the fuel-to-air mixture in at least one of the combustors is too lean, thereby resulting in excessive emissions of carbon monoxide (CO) and unburned hydrocarbon (UHC) occur. In addition, combustion flame instability may result in high pressure and temperature peaks within those combustors, thereby reducing the mechanical life of the combustors and/or the turbine.

One known system for reducing combustor to combustor fuel-to-air ratio variation includes a fuel supply system that includes a common control that meters the same rate of fuel to each combustor through a common fuel manifold. The fuel flowing to each combustor is controlled by orifice plugs disposed in a flow path defined between the common fuel manifold and each combustor. However, this system has been shown to have combustor to combustor fuel-to-air ratio variation due to machining tolerances, mechanical wear on the orifice plugs, pressure gradients within the fuel manifold and/or due to the circumferential position of the combustor. Another system known in the art includes combustor can-level controls which meter the rate of fuel to each individual combustor. However, this system is expensive to implement and maintain due to the cost of the hardware needed for each combustor. Accordingly, an improved system for reducing combustor to combustor fuel-to-air ratio variation would be useful.

### BRIEF DESCRIPTION OF THE INVENTION

Aspects and advantages of the invention are set forth below in the following description, or may be obvious from the description, or may be learned through practice of the invention.

One embodiment of the present invention is a fuel supply system for supplying fuel to a combustion section of a gas turbine. The combustion section includes a plurality of combustion sectors. Each combustion sector has at least two combustors. The fuel supply system generally includes a fuel distribution manifold that is in fluid communication with a fuel supply. A first flow path is defined between the fuel distribution manifold and a first combustion sector. A second flow path is defined between the fuel distribution manifold and a second combustion sector.

Another embodiment of the present invention is a fuel supply system for a combustion section of a gas turbine. The combustion section includes a plurality of fuel injectors circumferentially spaced within an annular ring that is enclosed within the combustion section. The fuel supply system comprises a fuel distribution manifold in fluid communication with a fuel supply. A first combustion sector is in fluid communication with the fuel distribution manifold through a first flow path. The first combustion sector includes at least two of the fuel injectors. A second combustion sector is in fluid communication with the fuel distribution manifold through a second flow path. The second fuel injection sector includes at least two of the plurality of fuel injectors.

Another embodiment of the present invention includes a combustion section of a gas turbine. The combustion section includes a plurality of combustion sectors arranged circumferentially around an outer casing of the combustion section. Each of the combustion sectors has at least two combustors. A fuel distribution manifold at least partially circumferentially surrounds the combustion section. The fuel distribution manifold is in fluid communication with a fuel supply through a first flow path that is defined between the fuel distribution manifold and a first combustion sector. A second flow path is defined between the fuel distribution manifold and a second combustion sector.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
Fig. 1 illustrates a cross section side view of a known gas turbine;
Fig. 2 illustrates a downstream view of a combustion section of the gas turbine as shown in Fig. 1, according to at least one embodiment of the present disclosure;
Fig. 3 illustrates a schematic of a portion of a fuel supply system according to at least one embodiment of the present disclosure;
Fig. 4 illustrates a downstream view of an alternate combustion section according to at least one embodiment of the present disclosure; and
Fig. 5 illustrates a schematic of a portion of the fuel supply system as shown in Fig. 3 connected to the combustion section as shown in Fig. 4, according to at least one embodiment of the present disclosure.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. In addition, the terms "upstream" and "downstream" refer to the relative location of components in a fluid pathway. For example, component A is upstream from component B if a fluid flows from component A to component B. Conversely, component B is downstream from component A if component B receives a fluid flow from component A.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

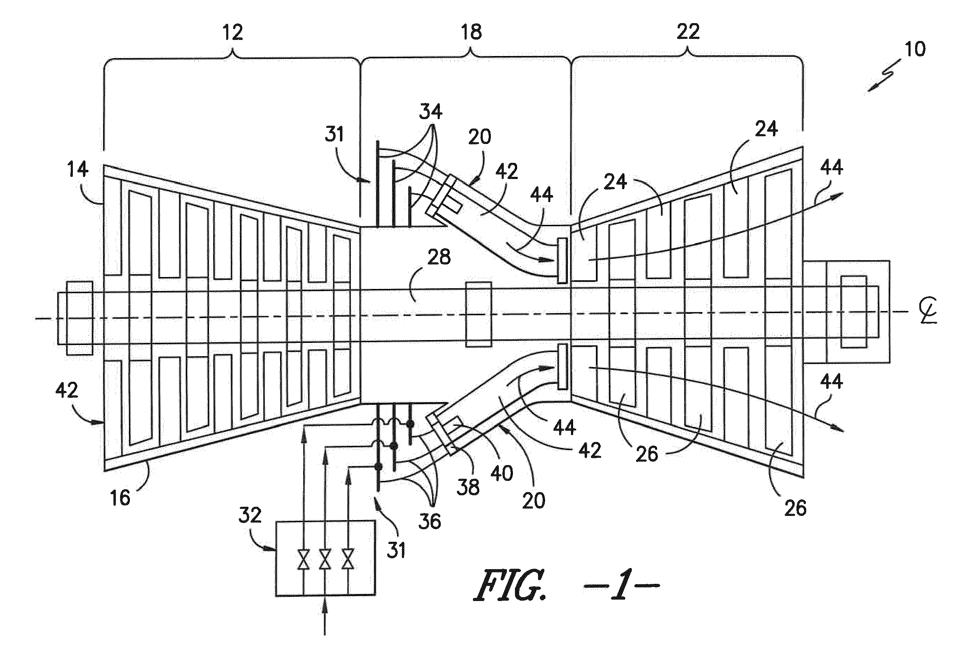

Referring now to the drawings, Fig. 1 illustrates an example of a known gas turbine 10. As shown, the gas turbine 10 generally includes a compressor section 12 having an inlet 14 disposed at an upstream end of the gas turbine 10, and a casing 16 that at least partially surrounds the compressor section 12. The gas turbine 10 further includes a combustion section 18 having a plurality of combustors 20 downstream from the compressor section 12, and a turbine section 22 downstream from the combustion section 18. The turbine section 22 generally includes alternating stages of stationary nozzles 24 and turbine rotor blades 26 disposed within the turbine section 22 along an axial centerline of a rotor shaft 28 that extends generally axially through the gas turbine 10.

A fuel supply system 31 generally includes a fuel supply 32 and at least one fuel distribution manifold 34 fluidly connected to the combustion section 18. The fuel supply 32 provides fuel to each fuel distribution manifold 34. Each fuel distribution manifold 34 may at least partially circumferentially surround a portion of the gas turbine 10. A fluid flow path 36 is defined between the fuel distribution manifold 34 and an end cover 38 that is disposed at one end of each combustor 20. At least one fuel nozzle 40 is disposed within each combustor 20. The fuel nozzle 40 may be in fluid communication with the fuel distribution manifold 34 through the end cover 38.

In operation, air 42 or other working fluid is drawn into the inlet 14 of the compressor section 12 and is compressed. Fuel flows from the fuel supply 32 through the fuel distribution manifold 34 and into each combustor 20. The compressed air flows into the combustion section 12 and is mixed with the fuel in each combustor 20 to form a combustible mixture. The combustible mixture is burned in a combustion chamber 42 defined within each combustor 20, thereby generating a hot gas 44 that flows from the combustion chamber 42 into the turbine section 22.

The hot gas 44 rapidly expands as it flows through the alternating stages of stationary nozzles 24 and turbine rotor blades 26 of the turbine section 22. Thermal and/or kinetic energy is transferred from the hot gas 44 to each stage of the turbine rotor blades 26, thereby causing the rotor shaft 28 to rotate and produce mechanical work. The rotor shaft 28 may be coupled to a load such as a generator (not shown) so as to produce electricity. In addition or in the alternative, the rotor shaft 28 may be used to drive the compressor section 12 of the gas turbine.

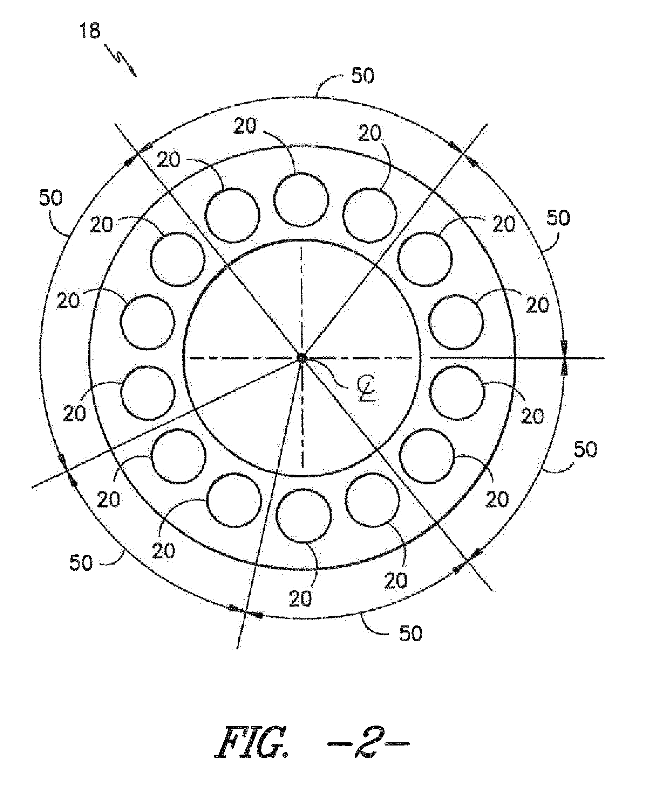

Fig. 2 illustrates a downstream schematic view of a portion of the combustion section 18 of the gas turbine 10 shown in Fig. 1, according to at least one embodiment of the present disclosure. In one embodiment, as shown in Fig. 2, the plurality of combustors 20 is circumferentially spaced in a can annular array around the axial centerline of the rotor shaft 28 (Fig. 1). As shown in Fig. 2, the plurality of combustors 20 is apportioned into individual combustion sectors 50. Each combustion sector 50 includes at least two of the plurality of combustors 20. In certain embodiments, each combustion sector 50 includes two of the combustors 20. For example, a combustion section 50 having fourteen combustors may be divided into seven combustion sectors 50 with each combustion sector 50 having two of the combustors 20. In further embodiments, some of the combustion sectors 50 may have more or less of the combustors 20 than other combustion sectors 50. For example, some of the combustion sectors 50 may have three combustors 20 each while other combustion sectors 50 have two combustors 20 each.

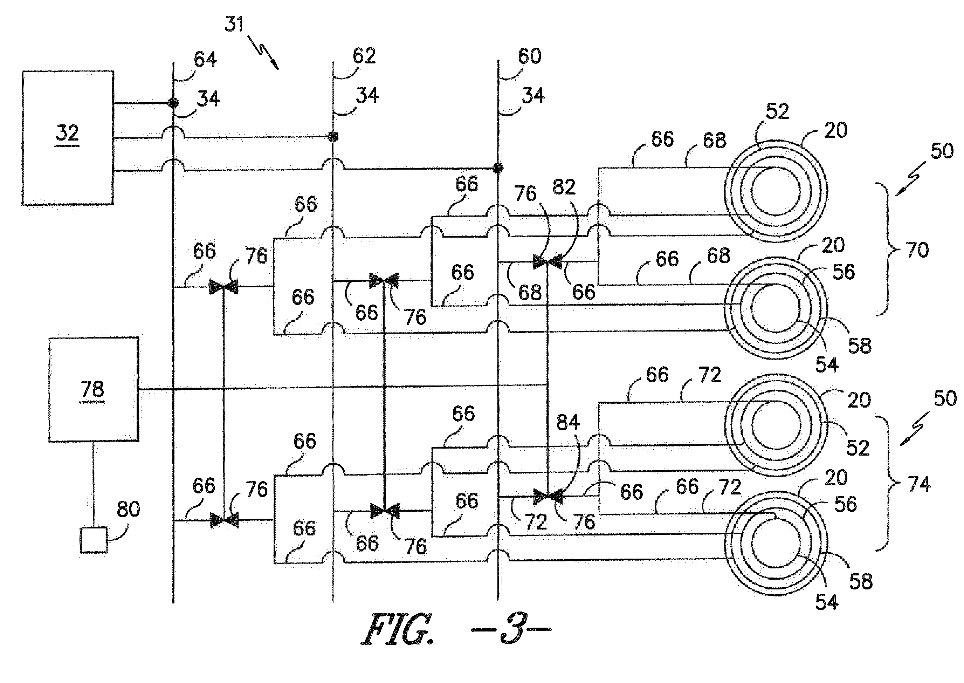

Fig. 3 illustrates two combustion sectors 50 of the combustion section 18 as shown in Fig. 2, with each combustion sector 50 having two combustors 20. Each combustion sector 50 being in fluid communication with the fuel supply system 31 (Fig. 1), according to at least one embodiment of the present disclosure. In particular embodiments, as shown in Fig. 3 each combustor 20 includes at least one fuel circuit 52. For example, as shown each combustor 20 may include a primary fuel circuit 54, a secondary fuel circuit 56 and a tertiary fuel circuit 58. However, it should be known to one of ordinary skill in the art that each combustor 20 may include more or less than three fuel circuits 52, and therefore, the present disclosure shall not be limited to only three fuel circuits 52. The fuel circuit 52 may at least partially define a flow path that extends between the fuel supply 32 and the combustion chamber 42 (Fig. 1) of each corresponding combustor 20. For example, the fuel circuit may be in fluid communication with at least one of the at least one fuel nozzle 40 of each combustor 20.

Each fuel distribution manifold 34 generally comprises of a plurality of fluid conduits such as metal pipes, valves and/or fluid couplings. In various gas turbine configurations, the fuel distribution manifold 34 extends circumferentially around the combustion section 18 of the gas turbine 10. (Fig. 1) In this manner, the fuel distribution manifold 34 may provide a more uniform flow of fuel to each of the combustion sectors 50 of the combustion section 18.

In particular embodiments, as shown in Fig. 3 each fuel distribution manifold 34 routes fuel to one of the fuel circuits 52 defined within each combustor 20 of the combustion section 50. For example, as shown in Fig. 3 a first fuel distribution manifold 60 routes fuel to the primary fuel circuit 54 of each combustor 20, a second fuel distribution manifold 62 routes fuel to the secondary fuel circuit 56, and a third fuel distribution manifold 64 routes fuel to the tertiary fuel circuit 58.

In particular embodiments as shown in Fig. 3, flow paths 66 are defined between each flow distribution manifold 34 and each combustion sector 50. Each flow path 66 may be defined by one or more fluid conduits such as pipes, valves and/or fluid couplings in fluid communication with the fuel distribution manifold 34. Each flow path 66 provides for fluid communication between one of the fuel distribution manifolds 34 and one of the fuel circuits 52 of each combustor 20 of a corresponding combustion sector 50. For example, as shown in Fig. 3, a first flow path 68 is defined between the first fuel distribution manifold 60 and the primary fuel circuit 54 of each combustor 20 in a first combustion sector 70, and a second flow path 72 is defined between the first fuel distribution manifold 60 and the primary fuel circuit 54 of each combustor 20 in a second combustion sector 74.

In various embodiments, at least one flow distribution valve 76 is disposed within each flow path 66 between each fuel distribution manifold 34 and each combustion sector 50. Generally, the flow distribution valve 76 includes an inlet to receive the fuel from the flow distribution manifold 34, and at least one outlet to route the fuel to each combustor 20 within the combustion sector 50. In particular embodiments, the flow distribution valve 76 may include more than one outlet. For example, the flow distribution valve 76 may be a three-way valve so as to provide fuel to each combustor 20 of the corresponding combustion sector 50. In particular embodiments, the flow distribution valves 76 include actuating mechanisms to control the fuel flow rate to the combustion sectors 50. The actuating mechanisms may be controlled manually and/or may be actuated remotely by an electronic signal.

In various embodiments, the fuel supply system includes a controller 78. The controller 78 may include any fuel control, gas turbine control or power plant controller known in the art that permits the fuel supply system 31 to be controlled and/or operated as described herein. Generally, the controller 78 may comprise any computer system having a processor(s) that executes programs, such as computer readable instructions stored in the controller's memory, to control the operation of the fuel supply system 31, the combustors 20 and/or the gas turbine 10 using sensor inputs and/or instructions from human operators.

In one or more embodiments, the controller 78 is linked to at least one sensor 80 disposed within the gas turbine 10 (Fig. 1) and to each flow distribution valve 76. The sensor 80 is configured to sense at least one operating parameter of the gas turbine 10. The operating parameter of the gas turbine 10 sensed by the sensor 80 may include but is not limited to exhaust gas temperature, dynamic pressure within the combustion section, ambient air temperatures or any combination of operating parameters including at least one of the foregoing. In particular embodiments, the sensor 80 is configured to sense at least one of an exhaust temperature, emissions composition, combustion dynamics and/or pressure, ambient air temperature or any combination of the foregoing. The sensor 80 may be disposed in any portion of the gas turbine 10 such as the turbine section 22 (Fig. 1) or the combustion section 18 (Fig. 1) or outside of the gas turbine 10. It should be appreciated by one of ordinary skill in the art that the fuel supply system 31 may include multiple sensors 80 disposed throughout the gas turbine 10, and the disclosure is not intended to limit the scope of the invention to only one sensor 80.

In particular embodiments, the controller 78 is configured to receive and process a signal from the sensor 80 and to generate a corresponding command signal. The command signal is then transmitted to the actuating mechanism of some or all of the flow distribution valves 76. The controller 78 selectively operates at least one of the flow distribution valves 76 based upon the operating parameter sensed by the sensor 80. For example, the controller 78 may increase or restrict the flow of fuel to individual combustion sectors 50 and/or to individual combustors 20 of a particular combustion sector 50.

In addition or in the alternative, the controller 78 may be configured to generate a command signal based on a particular operating mode of the gas turbine 10. For example, the controller 78 may generate a command signal to actuate some or all of the flow distribution valves 76 as the gas turbine 10 transitions between full speed full load, full speed no load, part speed and part load operation modes. In particular, the controller may generate a command signal to actuate some or all of the flow distribution valves 76 so as to take at least one of the combustion sectors offline while leaving other combustion sectors online.

In at least one embodiment, as shown in Fig. 3, each combustion sector 50 includes at least two of the combustors 20. The first flow path 68 is defined between the first fuel distribution manifold 60 and the first combustion sector 70, and the second flow path 72 is defined between the first fuel distribution manifold 60 and the second combustion sector 74. In further embodiments, each of the combustors 20 of the first and the second combustion sectors 70, 74 includes the primary fuel circuit 54. The primary fuel circuit 54 of the combustors 20 of the first combustion sector 70 being in fluid communication with the first flow path 68. The primary fuel circuit 54 of each combustor 20 of the second combustion sector 74 being in fluid communication with the second flow path 72.

In further embodiments, the fuel supply system 31 includes the first and the second flow distribution valve 82, 84, the first flow distribution valve 82 being in fluid communication with the first fuel distribution manifold 60 and the first combustion sector 70, the second flow distribution valve 84 being in fluid communication with the fuel distribution manifold 60 and the second combustion sector 74.

The first flow distribution valve 82 further defines the first flow path 68 between the first fuel distribution manifold 60 and each combustor 20 of the first combustion sector 70 and the second flow distribution valve 84 further defines the flow path 72 between the first fuel distribution manifold 60 and each combustor 20 of the second combustion sector 74. The controller 78 is linked to at least one sensor 80 and to the first and the second flow distribution valves 82, 84. The sensor 80 being configured to sense at least one operating parameter of the gas turbine 10 and the controller 78 selectively operating at least one of the first or the second flow distribution valves 82, 84 based upon the operating parameter sensed by at least one of the at least one sensor 80.

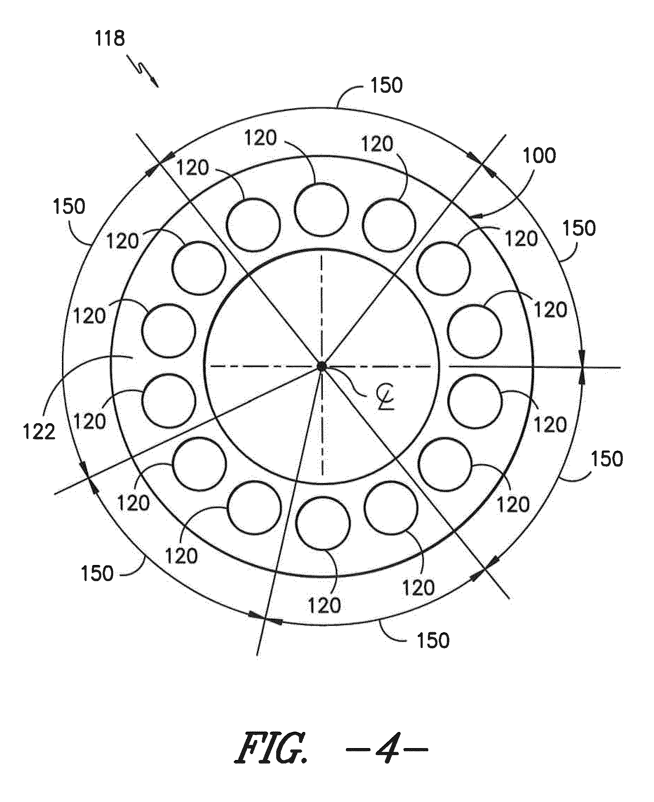

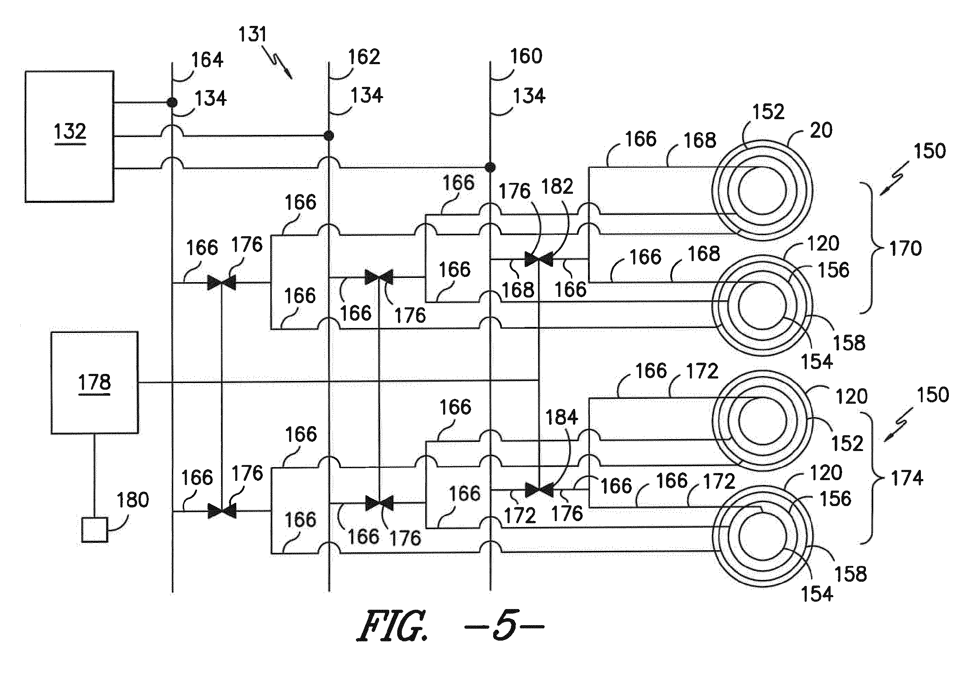

Fig. 4 illustrates a downstream schematic view of a portion of an alternate configuration of a combustion section 118 of a gas turbine such according to at least one embodiment of the present disclosure. Fig. 5 illustrates two combustion sectors 150 of the combustion section 118 as shown in Fig. 4, with each combustion sector 150 having two fuel injectors 120. As described in the following embodiments, each component of the fuel control system 31 and its functionality corresponds with a similar component described previously in this specification. For example, the fuel distribution manifold 34 as shown in Fig. 3, and the fuel distribution manifold 134 are of similar structure and functionality.

In an alternate embodiment, as shown in Fig. 4, the combustion section 118 comprises of an annular combustor 100 having a plurality of fuel injectors 120 circumferentially spaced within an annular ring 122 disposed within the combustion section 118. As shown in Fig. 5, each of the plurality of fuel injectors 120 are apportioned into individual combustion sectors 150. Each combustion sector 150 includes at least two of the plurality of fuel injectors 120. In certain embodiments, each combustion sector 150 includes two of the fuel injectors 120. In further embodiments, some of the combustion sectors 150 may have more or less of the fuel injectors 120 than other combustion sectors 150. For example, some of the combustion sectors 150 may include three of the fuel injectors 120 each while other combustion sectors 150 include two of the fuel injectors 120.

As shown in Fig. 5, each of the at least two fuel injectors 120 of the first and the second combustion sectors 170, 174 may include at least a primary 154 and a secondary 156 fuel circuit. The primary fuel circuit 154 of each fuel injector 120 is in fluid communication with a first fuel distribution manifold 160. The secondary fuel circuit 156 of each fuel injector 120 is in fluid communication with a second fuel distribution manifold 162. A first flow distribution valve 182 at least partially defines a first flow path 168 between the first fuel distribution manifold 160 and the first combustion sector 170. A second flow distribution valve 184 at least partially defines a second flow path 172 between the first fuel distribution manifold 160 and the second combustion sector 174.

In particular embodiments, the first flow distribution valve 168 is in fluid communication with the primary fuel circuit 154 of each fuel injector 120 of the first combustion sector 170. The second flow distribution valve 172 is in fluid communication with the primary fuel circuit 154 of each fuel injector 120 of the second combustion sector 174. In further embodiments, a controller 178 is linked to at least one sensor 180 and to the first and the second flow distribution valves 168, 172. The sensor 180 is configured to sense at least one operating parameter of the gas turbine 10. As sin previous embodiments, the controller 178 selectively operates or actuates at least one of the first or the second flow distribution valves 168, 172 based upon the operating parameter sensed by the at least one sensor 180.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A system for supplying fuel to a combustion section of a gas turbine, the combustion section having a plurality of combustion sectors, each combustion sector having at least two combustors, the system comprising:
   a. a fuel distribution manifold in fluid communication with a fuel supply;
   b. a first flow path defined between the fuel distribution manifold and a first combustion sector; and
   c. a second flow path defined between the fuel distribution manifold and a second combustion sector.
2. The system as in clause 1, wherein each of the combustors of the plurality of combustion sectors includes a primary and a secondary fuel circuit.
3. The fuel supply system as in clause 1 or clause 2, wherein the first flow path is in fluid communication with the primary fuel circuit of each combustor of the first combustion sector.
4. The system as in any preceding clause, wherein the second flow path is in fluid communication with the primary fuel circuit of each combustor of the second combustion sector.
5. The system as in any preceding clause, further comprising a first and a second flow distribution valve, the first distribution valve being in fluid communication with the fuel distribution manifold and the first combustion sector, and the second flow distribution valve being in fluid communication with the fuel distribution manifold and the second combustion sector.
6. The system as in any preceding clause, wherein the first flow distribution valve further defines the first flow path between the fuel distribution manifold and each combustor of the first combustion sector.
7. The system as in any preceding clause, wherein the second flow distribution valve further defines the flow path between the fuel distribution manifold and each combustor of the second combustion sector.
8. The system as in any preceding clause, further comprising a controller linked to at least one sensor and to the first and the second flow distribution valves, the sensor being configured to sense at least one operating parameter of the gas turbine, the controller selectively operating at least one of the first or the second flow distribution valves based upon the operating parameter sensed by the at least one sensor.
9. The system as in any preceding clause, wherein the at least one sensor is at least one of an exhaust temperature sensor, a dynamic pressure sensor, an ambient air temperature sensor or a combination of sensors including at least one of the foregoing.
10. A system for a combustion section of a gas turbine, the combustion section having a plurality of fuel injectors circumferentially spaced within an annular ring enclosed within the combustion section, the fuel supply system comprising:
   a. a fuel distribution manifold in fluid communication with a fuel supply;
   b. a first combustion sector in fluid communication with the fuel distribution manifold through a first flow path, the first combustion sector having at least two of the fuel injectors; and
   c. a second combustion sector in fluid communication with the fuel distribution manifold through a second flow path, the second fuel injection sector having at least two of the plurality of fuel injectors.
11. The system as in any preceding clause, wherein each of the at least two fuel injectors of the first and the second fuel injection sectors includes a primary and a secondary fuel circuit.
12. The system as in any preceding clause, wherein the primary fuel circuit of each fuel injector of the first and the second combustion sectors is in fluid communication with the fuel distribution manifold.
13. The system as in any preceding clause, further comprising a first and a second flow distribution valve, the first flow distribution valve further defining the first flow path between the fuel manifold and the first fuel injection sector, and the second flow distribution valve further defining the second flow path between the fuel manifold and the second fuel injection sector.
14. The system as in any preceding clause, wherein the first flow distribution valve is in fluid communication with the primary fuel circuit of each fuel injector of the first fuel injection sector, and the second flow distribution valve is in fluid communication with the primary fuel circuit of each fuel injector of the second combustion sector.
15. The system as in any preceding clause, further comprising a controller linked to at least one sensor and to the first and the second flow distribution valves, the sensor being configured to sense at least one operating parameter of the gas turbine, the controller selectively operating at least one of the first or the second flow distribution valves based upon the operating parameter sensed by the at least one sensor.
16. A combustion section of a gas turbine, comprising:
   a. a plurality of combustion sectors arranged circumferentially around an outer casing of the combustion section, each combustion sector having at least two combustors;
   b. a fuel distribution manifold at least partially circumferentially surrounding the combustion section, the fuel distribution manifold being in fluid communication with a fuel supply;
   c. a first flow path defined between the fuel distribution manifold and a first combustion sector; and
   d. a second flow path defined between the fuel distribution manifold and a second combustion sector.
17. The combustion section as in any preceding clause, wherein each combustor of the plurality of combustion sectors includes a primary and a secondary fuel circuit.
18. The combustion section as in any preceding clause, wherein the first flow path is in fluid communication with the primary fuel circuit of each combustor of the first combustion sector, and the second flow path is in fluid communication with the primary fuel circuit of each combustor of the second combustion sector.
19. The combustion section as in any preceding clause, further comprising a first and a second flow distribution valve, the first flow distribution valve further defining the first flow path, and the second flow distribution valve further defining the second flow path.
20. The combustion section as in any preceding clause, further comprising a controller linked to at least one sensor and to the first and the second flow distribution valves, the sensor being configured to sense at least one operating parameter of the gas turbine, the controller selectively operating at least one of the first or the second flow distribution valves based upon the operating parameter sensed by the at least one sensor.

## Claims

1. A system for supplying fuel to a combustion section of a gas turbine, the combustion section having a plurality of combustion sectors (70,74), each combustion sector having at least two combustors, the system comprising:
a. a fuel distribution manifold (60) in fluid communication with a fuel supply;
b. a first flow path (68) defined between the fuel distribution manifold (60) and a first combustion sector (70); and
c. a second flow path (72) defined between the fuel distribution manifold (60) and a second combustion sector (74).

2. The system as in claim 1, wherein each of the combustors of the plurality of combustion sectors includes a primary and a secondary fuel circuit.

3. The fuel supply system as in claim 1 or claim 2, wherein the first flow path is in fluid communication with the primary fuel circuit of each combustor of the first combustion sector.

4. The system as in any preceding claim, wherein the second flow path is in fluid communication with the primary fuel circuit of each combustor of the second combustion sector.

5. The system as in any preceding claim, further comprising a first and a second flow distribution valve, the first distribution valve being in fluid communication with the fuel distribution manifold and the first combustion sector, and the second flow distribution valve being in fluid communication with the fuel distribution manifold and the second combustion sector.

6. The system as in any preceding claim, wherein the first flow distribution valve further defines the first flow path between the fuel distribution manifold and each combustor of the first combustion sector.

7. The system as in any preceding claim, wherein the second flow distribution valve further defines the flow path between the fuel distribution manifold and each combustor of the second combustion sector.

8. The system as in any preceding claim, further comprising a controller linked to at least one sensor and to the first and the second flow distribution valves, the sensor being configured to sense at least one operating parameter of the gas turbine, the controller selectively operating at least one of the first or the second flow distribution valves based upon the operating parameter sensed by the at least one sensor.

9. The system as in any preceding claim, wherein the at least one sensor is at least one of an exhaust temperature sensor, a dynamic pressure sensor, an ambient air temperature sensor or a combination of sensors including at least one of the foregoing.

10. A system for a combustion section of a gas turbine, the combustion section having a plurality of fuel injectors circumferentially spaced within an annular ring enclosed within the combustion section, the fuel supply system being according to any one of the preceding claims and
a. a fuel distribution manifold in fluid communication with a fuel supply;
b. a first combustion sector in fluid communication with the fuel distribution manifold through a first flow path, the first combustion sector having at least two of the fuel injectors; and
c. a second combustion sector in fluid communication with the fuel distribution manifold through a second flow path, the second fuel injection sector having at least two of the plurality of fuel injectors.

11. The system as in any preceding claim, wherein each of the at least two fuel injectors of the first and the second fuel injection sectors includes a primary and a secondary fuel circuit.

12. The system as in any preceding claim, wherein the primary fuel circuit of each fuel injector of the first and the second combustion sectors is in fluid communication with the fuel distribution manifold.

13. The system as in any preceding claim, further comprising a first and a second flow distribution valve, the first flow distribution valve further defining the first flow path between the fuel manifold and the first fuel injection sector, and the second flow distribution valve further defining the second flow path between the fuel manifold and the second fuel injection sector.

14. The system as in any preceding claim, further comprising a controller linked to at least one sensor and to the first and the second flow distribution valves, the sensor being configured to sense at least one operating parameter of the gas turbine, the controller selectively operating at least one of the first or the second flow distribution valves based upon the operating parameter sensed by the at least one sensor.

15. A combustion section of a gas turbine including a system according to any one of the preceding claims and
a. a plurality of combustion sectors arranged circumferentially around an outer casing of the combustion section, each combustion sector having at least two combustors;
b. a fuel distribution manifold at least partially circumferentially surrounding the combustion section, the fuel distribution manifold being in fluid communication with a fuel supply;
c. a first flow path defined between the fuel distribution manifold and a first combustion sector; and
d. a second flow path defined between the fuel distribution manifold and a second combustion sector.
